# EUROPEAN PATENT APPLICATION

(11) **EP 1 458 201 A1**
(43) Date of publication of application: **15.09.2004**
(21) Application number: 04251233.5
(22) Date of filing: 03.03.2004
(51) Int. Cl.: H04Q 7/22

(54) **System and method for threading short message service (SMS) messages with multimedia messaging service (MMS) messages**

(30) Priority: 04.03.2003 US 379329
(71) Applicant: Openwave Systems Inc., Redwood City, CA 94063 (US)
(72) Inventor: Rukman, Jason, Woodinville, WA 98072 (US)
(74) Representative: Jackson, Richard Eric

(57) **Abstract**

The present invention is directed to a method and system for associating Short Message Service (SMS) messages with Multimedia Messaging Service (MMS) messages. The invention receives a first MMS message that is directed to an SMS client. The first MMS message is assigned a unique reply telephone number. A first SMS message is created from the first MMS message by replacing the sender's address in said first MMS message with the unique reply telephone number and by removing overhead information. The first SMS message is sent to the SMS client. A reply to said first SMS message in the form of a second SMS message addressed to the unique reply address is received from the SMS client. A second non-SMS message is created from the second SMS message by replacing the unique reply address with the original sender's address and by adding at least part of the overhead information.

## Description

### TECHNICAL FIELD

This invention relates in general to wireless messaging and, more particularly, to wireless messages sent via a Short Message Service (SMS) or via a Multimedia Messaging Service (MMS).

### BACKGROUND

The Short Message Service (SMS) is a wireless service that is used globally to transmit alphanumeric messages between mobile subscribers and/or between mobile telephones and external systems, such as electronic mail and paging systems. The SMS services allows users to send and receive text messages on a mobile phone or other wireless device. SMS is used to send messages of up to 160 characters. The SMS messages may be used to transmit short text messages, or they can be used to notify the mobile phone owner of a voice mail message or other event. The SMS messages may be sent to devices in the same wireless network cell, or they may be sent to devices that are roaming in another service provider's wireless network.

SMS is a user-friendly application in which a user typically selects a "write message" option from a messaging menu on a wireless device to create an SMS message. The user then types in a message, up to 160 characters in length, and enters the mobile telephone number of the recipient. When the user presses "send," the SMS message is transmitted to the wireless network where it is delivered to a Short Message Service Center (SMSC). The SMSC then routes the message to the designated recipient. For incoming SMS messages, the SMSC also controls the routing of the received messages to the wireless device.

SMS is available on systems such as those that comply with the Global System for Mobile Communications (GSM) standard, as well as on other Time Division Multiple Access (TDMA) and Code Division Multiple Access (CDMA) standards. The SMSC acts as a store-and-forward system for SMS messages so that the mobile user does not have to be active on the network. If a user's mobile phone is inactive when an incoming SMS messages is sent to the device, the wireless network may hold the SMS message for a number of days until the phone is again active on the network. An SMS-enabled mobile telephone can receive a short message at anytime, whether or not a voice or data call is in progress on the mobile device.

SMS is a point-to-point service that is designed to provide guaranteed delivery of text messages from one user to another. Typically, if an SMS user desires to send messages to multiple recipients, then multiple individual short messages must be sent. Due to the limited size of the SMS messages, there is little header information available. This limits the amount of descriptive information that is available. For example, an SMS message does not provide a subject line.

With the recent development of the Multimedia Messaging Service (MMS), mobile messaging has evolved beyond the simple text messages of SMS. In addition to text, MMS messages may contain a combination of images, graphics, and audio and video clips. MMS can be used to send personal multimedia messages between wireless devices, such as mobile telephones, or between a wireless device and an e-mail. Users can send pictures, photos, speech and audio from any wireless devices, including a mobile telephone, Personal Digital Assistant (PDA) or Personal Computer (PC).

An MMS message is not simply a text file with attachments, but instead it is a multimedia presentation in a single entity. MMS supports a number of formats or media types, including text formats; Joint Photographic Experts Group (JPEG), Graphics Interchange Format (GIF) and other image formats; Moving Picture Experts Group 4 (MPEG-4) and other video formats; and MPEG-1 Audio Layer-3 (MP3), Musical Instrument Digital Interface (MIDI), Audio/Modem Riser (AMR), Wave File Format (WAV) and other audio formats.

MMS is easily adopted by experienced SMS and mobile users, particularly subscribers who use text messaging, instant messaging or "chat" features. MMS is an open industry standard that provides support for e-mail addressing. MMS messages can be delivered using existing networks and protocols. The speed of MMS transmission is dependent on the message size and the bearer. However, the receiving user is not aware of the ongoing transmission until the whole message is delivered.

MMS is bearer independent and works with technologies such as GSM and Wideband Code Division Multiple Access (WCDMA) and with technologies proposed by the 3rd Generation Partnership Project (3GPP), the Open Mobile Alliance (formerly the WAP Forum), and the Mobile Instant Messaging and Presence Services (IMPS) Initiative - Wireless Village.

MMS and SMS are not compatible or interchangeable. However, there are many existing or legacy devices that are adapted for SMS only and, therefore, cannot take advantage of the features of MMS. Accordingly, there is a need for a system and method to provide MMS-like services to SMS devices.

### SUMMARY

The present invention is directed to a system and method for associating Short Message Service (SMS) messages with other SMS messages and with other types of messages. A first non-SMS message is directed to an SMS client, wherein the first non-SMS message includes an original sender's address and overhead information, wherein the original sender's address is a reply address for the first non-SMS message. A unique reply telephone number is assigned to the first non-SMS message. A first SMS message is created from the first non-SMS message by replacing the sender's address in the first non-SMS message with the unique reply telephone number and by removing the overhead information from the first non-SMS message. The first SMS message is forwarded to the SMS client, which creates a reply message.

The reply to the first SMS message is received in the form of a second SMS message from the SMS client. The second SMS reply message is addressed to the unique reply address. A second non-SMS message is created from the second SMS message by replacing the unique reply address with the original sender's address and by adding at least part of the overhead information to the second SMS message. The second non-SMS message is sent to the original sender's address.

The non-SMS message is an MMS message in one embodiment of the system. In certain embodiments, the overhead information in the first MMS message includes a message subject and the word "RE:" or "Reply" are added to the message subject when a second MMS message is created. In other embodiments, the overhead information includes addresses of additional recipients of the first MMS message. When additional addresses are present, they are added to the second MMS message.

Users can correlate the original message and any replies by using the subject matter information. This information can also be used it identify message or conversation threads by grouping related messages together.

The system operates by providing a gateway for exchanging messages between an MMSC and an SMSC. The SMSC provides SMS services to SMS clients and the MMSC provides MMS services to MMS clients. The gateway comprises a means for receiving MMS messages from the MMSC. In one embodiment, the MMS messages include originator address information, subject information and message text. The gateway also includes means for creating SMS messages from the MMS messages. The newly created SMS message include at least a portion of the MMS message text. The gateway also includes means for assigning a unique reply address to the new SMS messages. A transmitting means transmits the new SMS message to an SMSC for delivery to an intended recipient of the MMS message.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 illustrates one embodiment of a system incorporating the teachings of the present invention;

FIGURE 2 illustrates messages that are exchanged between two MMS devices;

FIGURE 3 illustrates messages that are exchanged between an MMS device and an SMS device according to the present invention;

FIGURE 4 illustrates messages that are exchanged between two MMS device and an SMS device according to the present invention;

FIGURE 5 is a flowchart illustrating one embodiment of the present invention; and

FIGURE 6 is a block diagram of one embodiment of a gateway for use in practicing the present invention.

### DETAILED DESCRIPTION

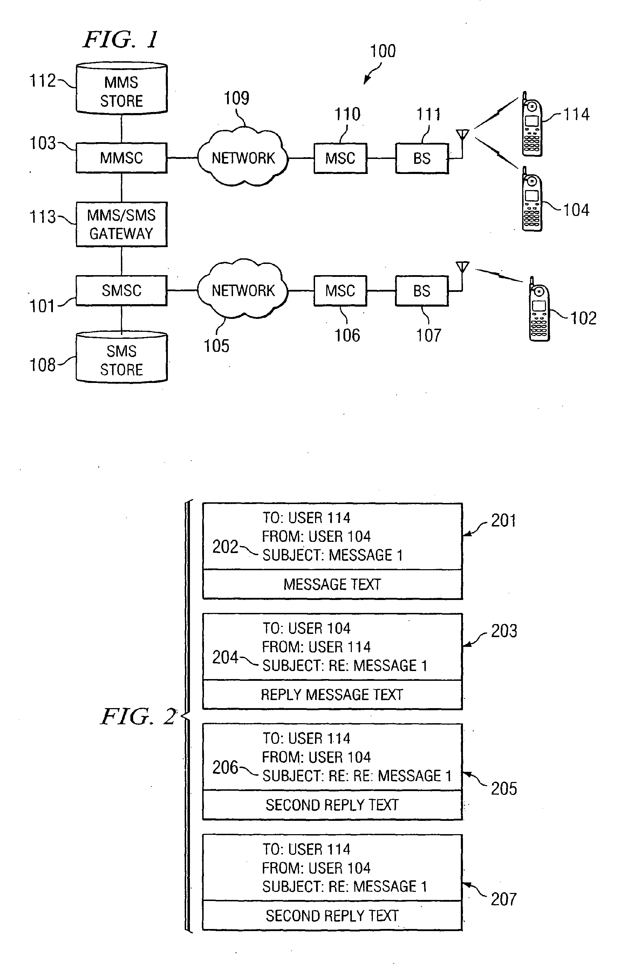

FIGURE 1 illustrates one embodiment of a system incorporating the teachings of the present invention. System 100 includes SMSC 101 for providing SMS services to SMS-capable devices, such as mobile telephone 102. System 100 also includes MMSC 103 for providing MMS services to MMS-capable devices, such as mobile telephone 104.

SMSC 101 is part of wireless network 105 that also includes Mobile Switching Center (MSC) 106 and base station 107. Base station 107 is in communication with SMS-capable device 102. As is well-known, device 102 may move from one location to another and maintains communication with network 105 using base station 107 or other base stations in other locations (not shown). SMS messages that are sent to or from device 102 are processed by SMSC 101. SMS message store 108 may be used by SMSC 101 to store SMS messages, such as SMS messages that are being routed to users that are not currently available.

MMSC 103 is part of wireless network 109 that includes MSC 110 and base station 111. Base station 111 is in communication with MMS-capable device 104. Device 104 may move from location to location and maintains communication with network 109 using base station 111 or other base stations in other locations (not shown). MMS messages that are sent to or from device 104 are processed by MMSC 103. MMS message store 112 may be used by MMSC 103 to store MMS messages, such as MMS messages that are being routed to users that are not currently available.

System 100 also includes MMS/SMS Gateway 113, which couples MMSC 103 to SMSC 101. Gateway 113, MMSC 103 and SMSC 101 may be connected either directly or remotely, using any method now known or later developed, so that messages may be passed between MMSC 103 and SMSC 101 via Gateway 113. It will be understood that in certain embodiments, MMS/SMS Gateway 113 may be incorporated as part of either SMSC 101 or MMSC 103. Alternatively, in other embodiments, Gateway 113, MMSC 103 and SMSC 101 may be a single device. For example, Gateway 113, MMSC 103 and SMSC 101 may be represented as separate applications running on a single server or as separate applications running on separate servers.

When MMS messages are exchanged between MMS clients, such as between MMS-capable devices 104 and 114, it is possible to organize the messages by a conversation, chat session or thread. For example, the subject line of the MMS messages may be used to identify, correlate and organize related messages. Often, when sending a reply to a message, the client prepends the word "RE:" or a similar term to the subject line of the reply message. Using the text of the subject line, related messages can be identified and can be organized, for example into a list, by placing replies after original messages.

FIGURE 2 illustrates the format of example MMS messages exchanged between two MMS-capable devices. An MMS message sent from device 104 to device 114 is processed by MMSC 103 in network 109. A user of device 104 creates MMS message 201 with the address for device 114 as the destination, and it then transmits the message to network 109, which routes message 201 to MMSC 103. MMS message 201 includes subject line 202. If device 114 is not available, then message 201 may be stored in MMS store 112. If device 114 is available, then MMSC 103 transmits message 201 to device 114 for delivery to the recipient. If device 114 is registered with another network (not shown), MMSC 103 forwards MMS message 201 to that network for delivery to recipient device 114.

The recipient at device 114 can create a response to MMS message 201 or may forward MMS message 201 to other users. In one embodiment, reply message 203 includes the same subject line information as original message 201, but the word "RE:" is added at the front of subject line 204. Reply message 203 is transmitted to device 104 in a manner similar to the transmission of original message 201.

The user of device 104 can continue the message exchange by replying to reply message 203. Device 104 adds "RE:" or some other word or phrase to the beginning of subject line 206 of second reply message 205. Accordingly, message 205 begins with the phrase "RE: RE:," indicating that message 205 is a second-level reply. In an alternative embodiment, device 104 may identify that the word "RE:" it is already present in subject line 204. In such an embodiment, a second "RE:" is not added to the reply message as shown in alternative reply message 207. Instead, the original reply subject line is used again.

After exchanging several MMS messages, devices 104 and 114 can group messages 201, 202, 204 together for the user using the information in subject lines 202, 204, 206. By ignoring the word "RE" in the subject line, the devices can identify MMS messages with the same subject line information. The messages can be further organized by placing subject lines with one or more "RE" words after the original message. Messages with multiple "RE:" words would be follow messages with less "RE:" words. For example, message 205 would be listed after message 203, which would be listed after message 201. This allows the user to observe messages "threads" in which several related MMS messages form a conversation.

Alternatively, once the MMS messages with related subject lines are identified, they can be organized using other parameters, such as time of transmission or receipt of the message, in addition to, or instead of, using the "RE:" words to organize the messages.

Referring again to FIGURE 1, device 102 is capable of exchanging messages that have the SMS format only. Device 102 cannot send or receive MMS messages. There are many such SMS-only devices in use today. These devices are unable to take advantage of the features introduced by MMS. Additionally, MMS-capable devices cannot include such SMS-only devices as recipients on messages that are sent to groups of MMS devices. The present invention provides a system for allowing an MMS-capable device to exchange messages with an SMS-only device. It will be understood that in this application, the term "SMS-only" refers solely to the text messaging capabilities of the device. Such devices are likely to also be capable of voice communication.

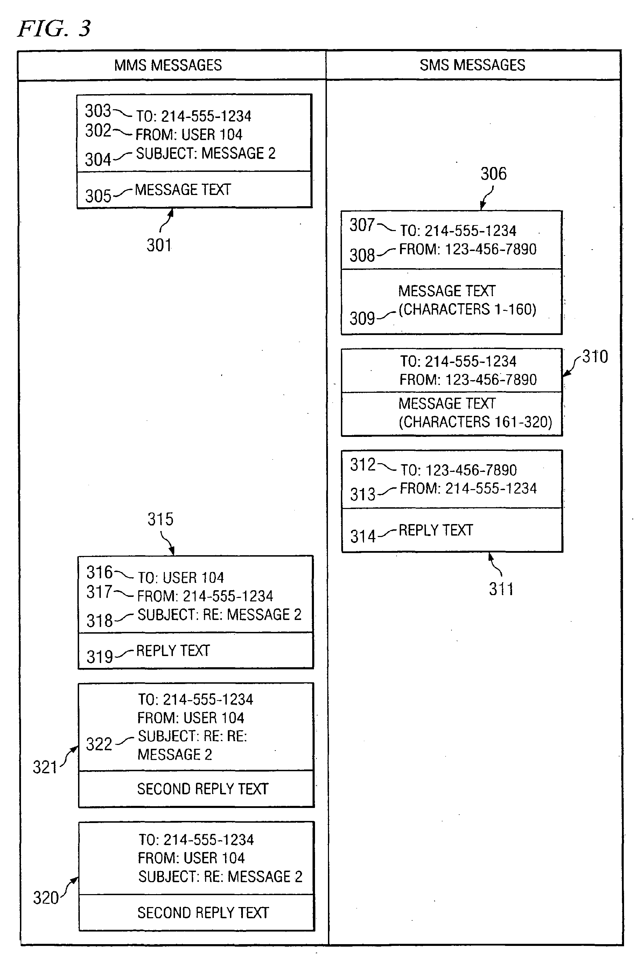

FIGURE 3 illustrates a series of messages that are exchanged between MMS-capable device 104 and SMS-only device 102. MMS message 301 is created by user 104 as indicated in "From" line 302. Message 301 is directed to user 102. Since device 102 is an SMS-capable device, message 301 has to identify the SMS address or telephone number of device 102. This is shown in "To" line 303 as device 102 phone number 214-555-1234. Message 301 also includes subject line 304 and message text 305. Device 104 transmits MMS message 301 to network 109, which routes the message to MMSC 103 for further processing.

MMSC 103 receives message 301 and determines that the address listed in "To" line 303 is not an MMS address, but is instead an SMS-type address. MMSC 1103 then sends the message to MMS/SMS gateway 113, which recognizes that message 301 is an MMS-type message with an SMS address. Gateway 113 then converts MMS message 301 into an SMS format to can be sent to SMS device 102. Gateway 113 creates SMS message 306 from the information contained in MMS message 301.

Because the telephone number of device 102 must be used to route SMS, "To" line 307 includes the same telephone number for device 102 that is used in message 301. "From" line 308 in SMS message 306 must be in a telephone number format so that the recipient can identify the sender and can respond to the message. In the present invention, gateway 113 creates a pseudo telephone number for "From" line 308. This pseudo telephone number may be the actual telephone number assigned to device 104 or may be a number assigned by gateway 113 to message 301. Text 309 in SMS message 306 is the same as message text 305 in MMS message 301. Unless message text 305 is more than 160 characters, in which case message text 305 is truncated and the first 160 characters are used to form SMS message 309. If message test 305 exceeds 160 characters, then gateway 113 may form one or more additional SMS messages, such as SMS message 310, that comprise the additional characters. Messages 306 and 310 provide up to 320 characters of message text 305. Additional SMS messages can be formed to send excess characters.

SMS messages, such as messages 306 and 310 do not include a subject line, so the information from subject line 304 is not included as a separate field in SMS messages 306 or 310 by gateway 113. As a result, SMS message 306 does not include subject line 304. In an alternative embodiment of the invention, gateway 113 prepends the information from MMS subject line 304 to text 305 to form SMS message text 309. For example, gateway 113 may create text 309 by copying subject line 304 first as the first sentence of message 309 and then using the text of message 305 as the remainder of message 309. In such a message, the recipient can determine the message subject by reading the first sentence of message 309.

Gateway 113 sends SMS message 306 to SMSC 101, which then routes the messages to device 102, where the intend recipient can read the message text 309, which includes the sender's original text 305. SMS does not typically provide a reply function. Instead, if the recipient desires to send a reply to message 306, he must create a new SMS message with the reply text. The recipient at device 102 uses pseudo telephone number 308 in the reply message to route the reply to the original sender at device 104.

Message 311 is an example of a reply to message 301. Reply message 311 is directed to the pseudo telephone number in "To" line 312. "From" line 313 indicates that reply message 311 is from the user at device 102. The user enters reply text 314 of up to 160 characters. Reply message 311 is transmitted by device 102 to network 105 and then to SMSC 101 for processing and routing. SMSC 101 identifies the pseudo telephone number in "To" line 312 as being associated with MMS/SMS gateway 113 and, therefore, forwards reply message 311 to gateway 113. SMSC 101 treats the pseudo telephone number as an actual SMS address and routes message 311 in the same manner as any other SMS message.

SMSC 101 does not need to identify MMS/SMS gateway 113 as a special network node, but instead treats it as any other network component that is used to route SMS messages. This allows MMS/SMS gateway 113 to operate with any SMSC.

Gateway 113 receives reply message 311 and analyzes "To" information 312 to determine how to route the message. The use of the pseudo telephone number identifies message 311 as requiring conversion to an MMS format. The pseudo telephone number was previously assigned by gateway 113 to message 301. Gateway 113 recognizes the pseudo telephone number and determines which previous messages are associated with the pseudo telephone number. Gateway 113 preferably maintains a list or database that tracks which incoming and outgoing messages have been associated with the pseudo telephone number. In this example, messages 301, 306 and 310 are all associated with the pseudo telephone number.

Gateway 113 determines that MMS message 301 was converted to message(s) 306 (and possibly 309) and that pseudo telephone number was assigned to those messages. Accordingly, when message 311 is received, gateway 113 operates to convert the pseudo telephone number information in the "To" line to the address for device 104. Gateway 113 also operates to convert message 311 from an SMS format to an MMS format, such as message 315, that can be routed to the intended recipient.

Message 315 is directed to device 104 in "To" line 316 and, the telephone number for device 102 in "From" line 317 identifies message 315 as originating at device 102. In one embodiment, gateway 113 also adds subject line 318. The information in subject line 318 is preferably the original subject line of message 301 with the word "RE:" prepended. The use of the original subject line in message 301 has the advantage of providing information that can be used by device 104 to associate message 315 with other messages on the same subject. Alternatively, other information may be used in subject line 318, such as the first line of reply text 314 or a statement identifying message 315 as a converted SMS message. The message text 319 of MMS message 315 is the same text as reply text 314 in message 311. Alternatively, gateway 113 may add additional information to reply text 314, such as a sender identification or a notice that this is a converted SMS message, to form reply text 319.

Gateway 113 sends message 315 to MMSC 103, which routes the message to the user at device 104 via network 109. Device 104 identifies message 315 as being a response to message 301 using subject line 318. Device 104 can organize and thread messages 301 and 315 with any other related messages for display to the user.

A second reply can be sent from device 104 to device 101. As discussed above with respect to FIGURE 2, second-level reply 320 may use the same subject line 318 as message 315. Alternatively, second-level reply 321 may prepend another "RE:" to the subject line as shown in subject line 322. Second-level reply messages, such as 320 or 321, are routed to device 101 in the same manner as described for message 301. If the recipient at device 102 replies to the second-level reply message (320, 321), then that message is formed and routed in the same manner as message 311 described above. Additional reply and response messages may continue to be exchanged between devices 102 and 104 in the same manner.

With each reply message, gateway 113 or device 104 may add another "RE:" to the subject line to indicate the that the message is a further reply to a previous message. The use of the same subject line with one or more "RE:" indications allows MMS device 104 to organize the related messages and to display them as conversation or message threads to the user. It will be understood that other words, symbols or annotations can be used instead of the word "RE:" without deviating from the intention of the present invention. For example, subsequent relies may be numbered, such as "RE2:" and "RE3:", or the subject line may be numbered, such as "Message 2 (#2)" and "Message 2 (#3)."

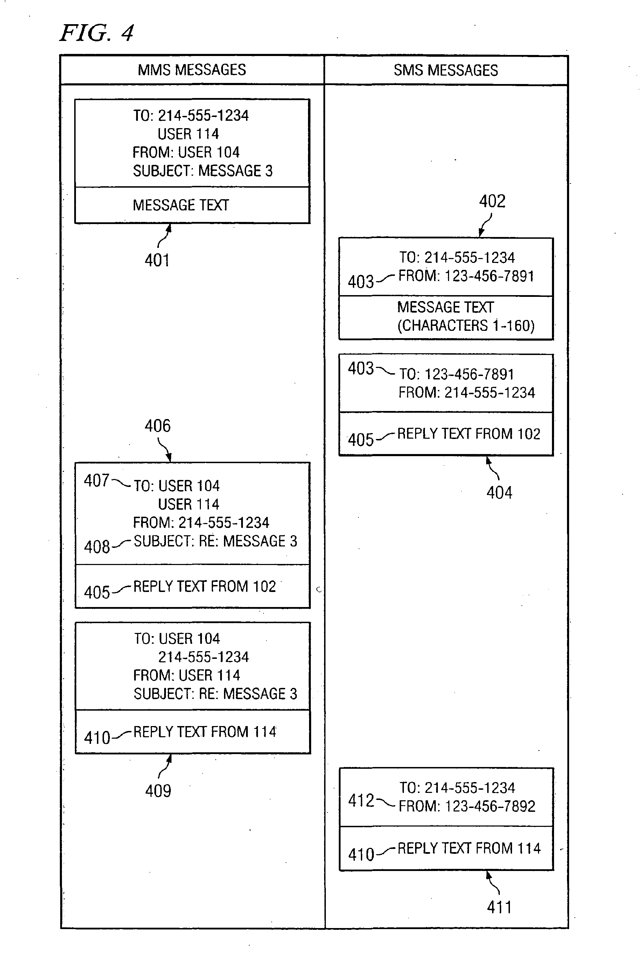

FIGURE 4 illustrates a series of messages and replies that are generated when MMS user 104 sends a message to multiple recipients and receives replies from those parties. Message 401 is an MMS message that is directed to MMS device 114 and to SMS device 102. Device 104 transmits message 401 to MMSC 103 via network 109. MMSC 103 determines that message 401 is directed to MMS device 114 and then forwards a copy of message 401 to device 114 via network 109. Because device 114 is an MMS-capable device, it receives the original MMS message 401.

MMSC 103 recognizes the address for recipient 101 as an SMS address and then forwards the message to gateway 113, which converts the message to SMS message 402 as discussed above with respect to messages 301 and 306 in FIGURE 3. Message 401 is assigned pseudo telephone number 403 by gateway 113 to identify who the message is from. SMS message 402 is forwarded to SMSC 101 and then to device 102. The user of device 102 generates new SMS message 404 to reply to message 402. Message 404 includes reply text 405 and is directed to pseudo telephone number 403. Device 102 transmits message 404 to SMSC 101, which in turn routes the message to gateway 113.

Gateway 113 identifies pseudo telephone number 403 in message 404 as being related to MMS message 401. Gateway 113 then converts SMS message 404 into MMS message 406 with reply text 405. In one embodiment of the invention, replies generated by an SMS device are treated as "Reply To All" messages by gateway 113. In such a system, message 406 is directed to all of the parties that received the original MMS message 401. Therefore, "To" line 407 in message 406 is addressed to devices 104 and 114. In a preferred embodiment, the word "RE:" is added to the original subject line of the message 401 in subject line 408. Message 406 is then routed to both 104 and 114 via MMSC 103 and network 109. In an alternative embodiment, gateway 113 only forwards replies to the original sender. In that embodiment, reply message 406 would be directed only to device 104.

The recipient of message 401 at device 114 may reply to the message. If the recipient selects "Reply To All," then message 409 is created with reply text 410. Message 409 is sent to MMSC 103 which recognizes the address for device 102 as an SMS address and routes the message to gateway 113, which creates new SMS message 411 to send reply text 410 to user 102. Message 409 is assigned pseudo telephone number 412 so that any replies from device 102 to message 411 can be routed back to sender 114.

In the above example, device 104 has sent original message 401 and received replies 406 and 409. Using the subject line, device 104 can correlate and organize these messages. Device 104 can display messages 401, 406 and 409 to the user as a conversation thread. When a user exchanges messages with several other users on different subjects, the user's MMS device will have multiple threads. These different subject matter threads can be separated and displayed to the user. Using the teachings of the present invention, messages exchanged with an SMS-capable device can also be included in those message threads.

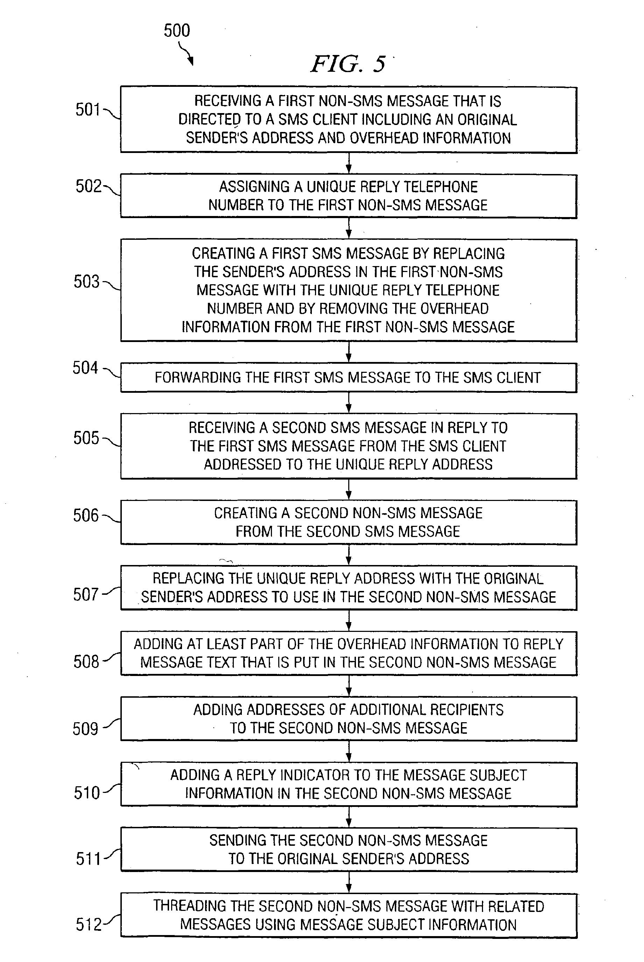

FIGURE 5 is a flowchart illustrating one embodiment of the present invention. Flowchart 500 illustrates a method for associating Short Message Service (SMS) messages with non-SMS messages and with other SMS messages. In 501, a first non-SMS message is received. The first non-SMS message is directed to an SMS client. The first non-SMS message includes an original sender's address and overhead information. The original sender's address also operates as a address for replies to the first non-SMS message. In 502, a unique reply telephone number is assigned to the first non-SMS message. In 503, a first SMS message is created by replacing the sender's address in the first non-SMS message with the unique reply telephone number and by removing the overhead information from the first non-SMS message.

In 504, the first SMS message is forwarded to the SMS client. In 505, a second SMS message is received in reply to the first SMS message from the SMS client. The second SMS message is addressed to the unique reply address that was added to the first SMS message. In 506, a second non-SMS message is created from the second SMS message. The unique reply address is replaced with the original sender's address in 507 and at least part of the overhead information is added to the second non-SMS message in 508.

If additional recipients were included in the first non-SMS message, then those addresses are added to the second non-SMS message in 509. This step is optional and the second non-SMS message, which is a reply message, may be directed only to the original sender in certain embodiments. In 510 a reply indicator, such as the word "RE:" is added to subject information in the second non-SMS message. In 511, the second non-SMS message is sent to the original sender's address. The original sender correlates the first and second non-SMS messages in 512. This allows the user to view message threads for messages related to the original message.

In one embodiment, the non-SMS messages are Multimedia Messaging Service (MMS) messages. The overhead information includes message subject information in certain embodiments.

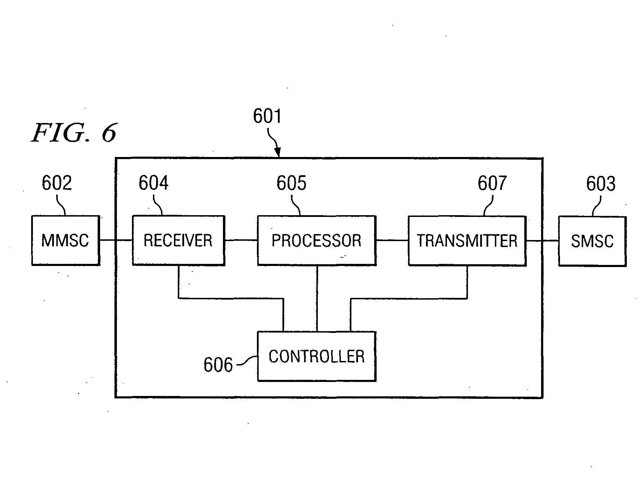

FIGURE 6 illustrates one embodiment of a gateway for use in practicing the present invention. Gateway 601 is used for exchanging messages between Multimedia Messaging Service Center (MMSC) 602 and Short Message Service Center (SMSC) 603. SMSC 603 provides SMS services to SMS clients and MMSC 602 provides MMS services to MMS clients. Gateway 601 comprises a receiver 604 for receiving MMS messages from MMSC 602. The MMS messages include at least originator address information, subject information and message text.

Gateway 601 also includes processor 605 for creating SMS messages from the MMS messages. New SMS messages comprise at least a portion of the text from corresponding MMS messages. Gateway 601 also includes controller 606 for assigning a unique reply address to each of the new SMS messages. The reply address is used by gateway 601 to identify the original MMS message that corresponds to the new SMS message. Gateway 601 also includes a transmitter 607 for transmitting the new SMS messages to SMSC 603, which in turn delivers the new SMS messages to the SMS clients that were the intended recipients of the original MMS messages.

It will be understood by those of skill in the art that gateway 601 and its receiving, processing, controlling and transmitting components may be embodied in any number of ways. For example, these components may be separate and distinct components, such as processors, microprocessors, Application Specific Integrated Circuits (ASICs), Digital Signal Processors (DSPs) or other specialized circuits. Alternatively, one or more of the components may be embodied as applications or software instructions running on a server computer or on a processor, microprocessor, ASIC or DSP. Such applications or software instructions may be embodied using any number of algorithms for performing the steps and functions required by the invention.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for associating Short Message Service (SMS) messages with other types of messages, comprising:
receiving a first non-SMS message that is directed to an SMS client, wherein said first non-SMS message includes an originator's messaging address that is a reply address for said first non-SMS message;
assigning a reply telephone number to said first non-SMS message;
creating a first SMS message from said first non-SMS message by replacing the originator's messaging address in said first non-SMS message with said reply telephone number;
forwarding said first SMS message to the SMS client;
receiving a reply to said first SMS message in the form of a second SMS message from the SMS client, wherein said second SMS reply message is addressed to said reply telephone number;
creating a second non-SMS message from said second SMS message by replacing said reply telephone number with the originator's messaging address; and
sending said second non-SMS message to said originator's messaging address.

2. The method of claim 1 wherein said first and second non-SMS messages are Multimedia Messaging Service (MMS) messages.

3. The method of claim 1 wherein said first non-SMS message includes a message subject.

4. The method of claim 1 wherein said first non-SMS message includes addresses of additional recipients of the first non-SMS message, and wherein creating a second non-SMS message further comprises:
adding said addresses of additional recipients to said second SMS message.

5. The method of claim 3 further comprising:
adding a reply indicator to said message subject in said second non-SMS message.

6. The method of claim 5 further comprising:
threading said second non-SMS message with related messages using said message subject.

7. A gateway for exchanging messages between a Multimedia Messaging Service Center (MMSC) and a Short Message Service Center (SMSC), wherein the SMSC provides SMS services to SMS clients and wherein the MMSC provides MMS services to MMS clients, the gateway comprising:
means for receiving MMS messages from said MMSC, wherein said MMS messages include originator address information, subject information and message text;
means for creating SMS messages from the MMS messages, wherein a new SMS message comprises at least a portion of the MMS message text; and
means for assigning a unique reply address to said new SMS message; and
means for transmitting said new SMS message to an SMSC for delivery to an intended recipient of said MMS message.

8. The gateway of claim 7 further comprising:
means for receiving a second SMS message from the SMSC, wherein the second SMS message is a reply to said new SMS message, and wherein the second SMS message is addressed to said unique reply address.

9. The gateway of claim 8 further comprising:
means for creating a second MMS message from said second SMS message, wherein the second MMS message comprises text from the second SMS message and is addressed using said originator address information.

10. The gateway of claim 9 further comprising:
means for adding reply subject information to the second MMS message, wherein the reply subject information comprises the subject information of the MMS message and a reply indicator.

11. The gateway of claim 10 wherein said reply indicator is selected from the words in the group consisting of "RE:", "Re:", and "Reply:".

12. The gateway of claim 7 wherein said at least a portion of the MMS message text in said new SMS message comprises a first 160 characters of said message text in said MMS message.

13. The gateway of claim 7 wherein said unique reply address is in a telephone number format.

14. The gateway of claim 9 wherein said MMS messages include additional recipient address information associated with one or more other recipients to whom the message is addressed and wherein said new SMS message does not include the additional address information, the gateway further comprising:
means for adding the additional recipient address information to said second MMS message.

15. The gateway of claim 9 wherein said MMS messages include additional recipient address information associated with one or more other recipients to whom the message is addressed and wherein said new SMS message does not include the additional address information, the gateway further comprising:
means for sending said second MMS message to the one or more other recipients associated with the additional recipient address information.

16. The gateway of claim 15 wherein said means for sending comprises:
means for transmitting said new SMS message to an SMSC for delivery to said other recipients of said MMS message.

17. A method for exchanging messages between a Multimedia Messaging Service Center (MMSC) and a Short Message Service Center (SMSC), wherein the SMSC provides SMS services to SMS clients and wherein the MMSC provides MMS services to MMS clients, comprising:
receiving MMS messages from said MMSC, wherein said MMS messages include originator address information, subject information and message text;
creating SMS messages from the MMS messages, wherein a new SMS message comprises at least a portion of the MMS message text; and
assigning a unique reply address to said new SMS message; and
transmitting said new SMS message to an SMSC for delivery to an intended recipient of said MMS message.

18. The method of claim 17 further comprising:
receiving a second SMS message from the SMSC, wherein the second SMS message is a reply to said new SMS message, and wherein the second SMS message is addressed to said unique reply address.

19. The method of claim 18 further comprising:
creating a second MMS message from said second SMS message, wherein the second MMS message comprises text from the second SMS message and is addressed using said originator address information.

20. The method of claim 19 further comprising:
adding reply subject information to the second MMS message, wherein the reply subject information comprises the subject information of the MMS message and a reply indicator.

21. The method of claim 17 wherein said at least a portion of the MMS message text in said new SMS message comprises a first 160 characters of said message text in said MMS message.

22. The method of claim 17 wherein said unique reply address is in a telephone number format.

23. The method of claim 19 wherein said MMS messages include additional recipient address information associated with one or more other recipients to whom the message is addressed and wherein said new SMS message does not include the additional address information, the method further comprising:
adding the additional recipient address information to said second MMS message.

24. The method of claim 19 wherein said MMS messages include additional recipient address information associated with one or more other recipients to whom the message is addressed and wherein said new SMS message does not include the additional address information, the method further comprising:
sending said second MMS message to the one or more other recipients associated with the additional recipient address information.

25. The method of claim 24 wherein said sending step further comprises:
transmitting said new SMS message to an SMSC for delivery to said other recipients of said MMS message.
